# FASCICULE DE BREVET EUROPEEN

(11) **EP 3 466 759 B1**
(45) Date de publication et mention de la délivrance du brevet: **23.09.2020**
(21) Numéro de dépôt: 18168617.1
(22) Date de dépôt: 20.04.2018
(51) Int. Cl.: B60Q 1/50, F21S 43/20, G03B 21/10, F21W 105/00

(54) **DISPOSITIF LUMINEUX AVEC AFFICHAGE ET PROJECTION D'IMAGE**
LEUCHTVORRICHTUNG MIT BILDANZEIGE UND -PROJEKTION
LIGHT DEVICE WITH IMAGE PROJECTION AND DISPLAY

(30) Priorité: 11.05.2017 FR 1754128
(43) Date de publication de la demande: 10.04.2019
(73) Titulaire: Valeo Vision, 93012 Bobigny Cedex (FR)
(72) Inventeur: ALBOU, Pierre, 93012 BOBIGNY Cedex (FR); LI, Joel, 93012 BOBIGNY Cedex (FR); CALAIS, Valère, 93012 BOBIGNY Cedex (FR)
(74) Mandataire: Valeo Vision

(56) Documents cités:
- WO-A1-2016/050503
- WO-A1-2016/050967
- US-A1- 2008 198 372
- US-A1- 2015 156 448

## Description

L'invention a trait au domaine de l'éclairage et/ou de la signalisation lumineuse, notamment pour véhicule automobile.

Le document de brevet publié sous le numéro WO 2016/050503 A1 divulgue un dispositif de signalisation lumineuse pour véhicule automobile, configuré pour afficher un pictogramme sur une zone d'un écran d'affichage en transmission. L'écran correspond à une glace de fermeture du boîtier du dispositif. Le pictogramme est produit par un premier module lumineux pouvant comprendre un microsystème électromécanique à matrice de miroirs apte à être commandé et produire différents pictogrammes. Le dispositif peut également comprendre un deuxième module lumineux configuré pour éclairer une autre zone de l'écran d'affichage, distincte de la zone affichant le pictogramme. Un tel dispositif est intéressant en ce qu'il combine plusieurs fonctions de signalisation lumineuse dans un même dispositif, une des fonctions de signalisation lumineuse comprenant l'affichage de pictogramme. Comme cela est apparent dans cet enseignement, l'affichage d'un pictogramme requiert un module lumineux potentiellement volumineux, essentiellement en ce qu'il doit projeter le pictogramme sur une zone de la glace du dispositif qui doit présenter une taille minimum afin que le pictogramme puisse être perçu par les observateurs aux alentours du véhicule. Cela signifie que la ou les zones de la glace restantes sont réduites. Cet enseignement ne détaille par ailleurs pas l'agencement et la construction de tels modules complémentaires à celui réalisant le pictogramme.

Le document de brevet publié EP 1 793 261 A1 divulgue un dispositif lumineux configuré pour afficher des pictogrammes sur un écran photoluminescent. Un tel dispositif a pour application principale l'affichage de pictogrammes dans le champ de vision du conducteur d'un véhicule, le pare-brise du véhicule formant alors l'écran photoluminescent. Une telle application étant couramment désignée « affichage tête haute ». Le document de brevet publié WO 2016/050967 A1 divulgue un dispositif lumineux arrière pour véhicule avec deux surfaces externes différentes chacune formant une zone dispersive. Cet enseignement n'est pas conséquent pas adapté pour l'affichage de pictogrammes à l'attention de personnes aux alentours du véhicule, comme notamment depuis un feu arrière.

L'invention a pour objectif de pallier au moins un des inconvénients de l'état de la technique susmentionné. Plus particulièrement, l'invention a pour objectif de permettre un affichage d'image lumineuse, telle qu'un pictogramme, combiné à de la signalisation lumineuse, présentant davantage de possibilités, notamment en terme de taille.

L'invention a pour objet un dispositif lumineux, notamment pour véhicule automobile, comprenant un écran transparent ou translucide ; un module lumineux apte à projeter un faisceau lumineux sur l'écran ; remarquable en ce que l'écran comprend une première zone diffusante et une deuxième zone non diffusante, de sorte à ce qu'une première partie du faisceau lumineux projeté sur la première zone soit diffusé par l'écran et qu'une deuxième partie dudit faisceau soit transmise par ledit écran vers une surface de projection extérieure.

Avantageusement, le caractère diffusant ou non-diffusant d'au moins une des première et deuxième zones peut être variable dans le temps et être commandé.

Selon un mode avantageux de l'invention, le module lumineux comprend une source lumineuse et un imageur à commande apte à former différentes images en fonction d'un signal de commande.

Selon un mode avantageux de l'invention, l'imageur comprend un composant à cristaux liquides apte à transmettre de manière contrôlée la lumière émise par la source lumineuse.

Selon un mode avantageux de l'invention, la source lumineuse présente une surface éclairante inférieure ou égale à 10 mm².

Selon un mode avantageux de l'invention, le module lumineux est configuré pour former des images lumineuses distinctes et indépendantes sur les première et deuxième zones de l'écran.

Selon un mode avantageux de l'invention, le module lumineux est configuré pour que la ou les images lumineuses transmises par la deuxième zone comprennent des pictogrammes. Par pictogramme on entend une représentation graphique schématique, plus particulièrement un dessin figuratif stylisé ayant fonction de signe, tel qu'une flèche, un point d'exclamation, etc.

Selon un mode avantageux de l'invention, les première et deuxième zones sont adjacentes.

Avantageusement, une des première et deuxième zones est située à l'intérieur de l'autre desdits zones.

Selon un mode avantageux de l'invention, la première zone de l'écran comprend un film diffusant et/ou une surface avec un relief régulier formant un dioptre diffusant.

Selon un mode avantageux de l'invention, la deuxième zone de l'écran est transparente et lisse.

Selon un mode avantageux de l'invention, le dispositif comprend un boîtier avec une ouverture et logeant le module lumineux, l'écran formant une glace recouvrant l'ouverture du boîtier.

Selon un mode avantageux de l'invention, la deuxième zone de l'écran est située en dessous de la première zone lorsque le dispositif est en position de montage.

Selon un mode avantageux de l'invention, le dispositif est un feu arrière de véhicule automobile.

Les mesures de l'invention sont avantageuses en ce qu'elles permettent de projeter une image lumineuse sur une surface de projection d'une taille potentiellement importante alors même que le dispositif lumineux reste compact. Les mesures de l'invention sont également avantageuses en ce qu'un seul module lumineux assure au moins deux fonctions lumineuses distinctes, l'une étant un faisceau diffusant et l'autre étant une projection d'image en dehors du module lumineux.

D'autres caractéristiques et avantages de la présente invention seront mieux compris à l'aide de la description et des dessins parmi lesquels :
- La figure 1 est une représentation schématique de la partie arrière d'un véhicule automobile équipé d'un dispositif lumineux conforme à l'invention ;
- La figure 2 est une vue en coupe et schématique du dispositif lumineux de la figure 1.

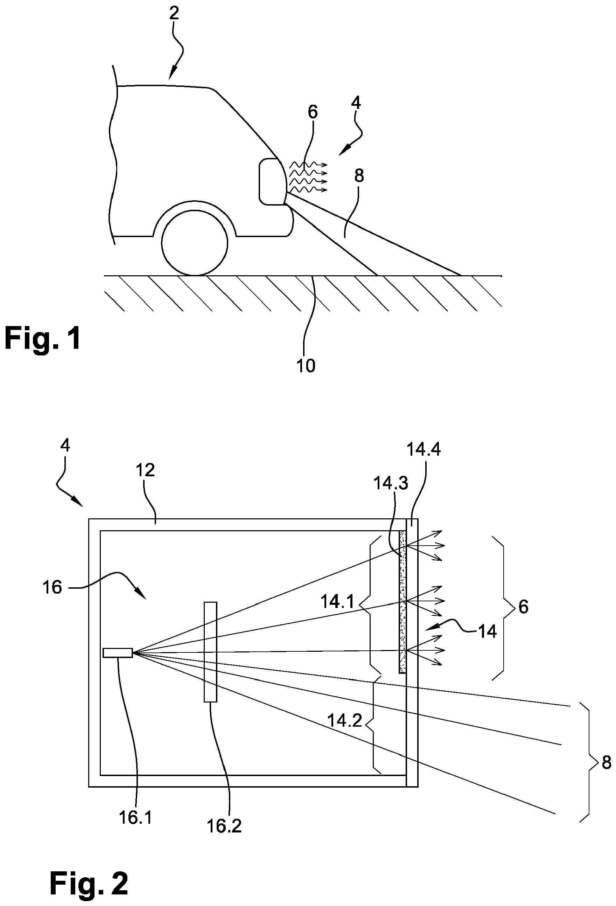

La figure 1 illustre schématiquement les fonctions d'un dispositif lumineux conforme à l'invention, le dispositif étant en l'occurrence disposé sur un véhicule automobile.

Le véhicule automobile 2 comprend à sa partie arrière un dispositif lumineux sous forme de feu arrière. Le dispositif lumineux 4 est configuré pour produire au moins un faisceau lumineux de signalisation 6 et pour afficher un pictogramme 8 sur une surface de projection 10 extérieure au dispositif lumineux 4. En l'occurrence la surface de projection est formée par la route 10 située au voisinage du véhicule.

La figure 2 illustre de manière schématique et en coupe le dispositif lumineux de la figure 1. Le dispositif 4 comprend un boîtier 12 avec une ouverture, une glace 14 formant un écran, fixée au boîtier 4 et refermant l'ouverture, et un module lumineux 16. Le module en question est configuré pour projeter une image du type pictogramme, c'est-à-dire formant une représentation graphique schématique, ou encore un dessin figuratif stylisé ayant fonction de signe. Pour ce faire le module 16 comprend au moins une source lumineuse 16.1 et un dispositif optique 16.2 apte à former le pictogramme à partir des rayons lumineux émis par la ou les sources lumineuses 16.1. Le dispositif optique 16.2 peut être un imageur apte à former différents pictogrammes en fonction d'un signal électrique de commande. Une tel imageur peut comprendre un miroir mobile apte à réfléchir un rayon lumineux balayant de manière périodique et rapide une surface de l'écran 14 correspondant au pictogramme à afficher. L'afficheur peut également comprendre un microsystème électromécanique ou MEMS (acronyme de l'expression anglo-saxonne « Microelectromechanical systems ») formant matrice de micro-miroirs. Ces micro-miroirs sont pivotants et aptes à basculer entre deux positions stables, l'une correspondant à un état actif dit « on » et l'autre à un état inactif dit « off » (où la lumière est réfléchie vers une zone absorbante). Dans le cas de la figure 2, l'imageur 16.2 est un composant électronique à cristaux liquides dit LCD apte à transmettre de manière contrôlée la lumière émise par la ou les sources lumineuses 16.1 suivant des signaux de commande. Les différents imageurs décrits ci-avant sont en soi bien connus de l'homme de métier et ne requièrent par conséquent pas d'être davantage décrits.

Comme cela est visible à la figure 2, le module lumineux 16 forme un cône lumineux éclairant la face interne de l'écran 14. Celle-ci comprend une première zone ou portion 14.1 diffusante et une deuxième zone ou portion 14.2 transparente et non diffusante. Chacune des première et deuxième zones 14.1 et 14.2 est éclairée par le cône lumineux du module lumineux 16. La lumière rencontrant la première zone est diffusée lors de sa transmission au travers de l'écran 14 pour former le faisceau lumineux de signalisation 6. Il peut notamment s'agir d'une fonction de lanterne, d'indicateur de direction (clignotant), de feux stop, de feu de recul ou encore de feu antibrouillard. A l'inverse, la lumière rencontrant la deuxième zone est transmise sans ou avec très peu de diffusion pour former un faisceau de projection 8 vers une surface de projection située à l'extérieur du dispositif lumineux 4, en l'occurrence la route avoisinante.

Le module lumineux 16 peut ainsi être configuré pour former des images distinctes et indépendantes sur les première et deuxième zones 14.1 et 14.2. A titre d'exemple, l'image produite sur la première zone peut présenter une géométrie fixe, notamment une géométrie simple consistant à éclairer de manière homogène la totalité de la première zone 14.1. L'image produite sur la deuxième zone 14.2 est quant à elle un pictogramme qui est projeté sur la surface de projection extérieure. Ce pictogramme peut être fixe ou variable. Plusieurs pictogrammes peuvent être affichés de manière sélective en fonction de certaines circonstances liées au véhicule et à son environnement. Les pictogrammes peuvent notamment comprendre des sigles ou symboles ayant une signification reconnue et utile pour la circulation aux alentours du véhicule. A titre d'exemple, les pictogrammes peuvent comprendre un point d'exclamation, une flèche ou encore un mot exprimant une situation.

Le module lumineux 16 est ainsi partagé par les première et deuxième zones 14.1 et 14.2 de l'écran afin de former deux faisceaux lumineux de natures différentes, l'un étant un faisceau de signalisation lumineuse et l'autre étant un faisceau de projection d'un pictogramme sur une surface de projection extérieure. A cet effet, cette surface et le pictogramme projeté sur cette surface peuvent être d'une taille sensiblement supérieure à celle de la zone correspondante, en l'occurrence la deuxième zone 14.2, de l'écran.

Le caractère diffusant de la première zone 14.1 de l'écran 14 peut être obtenu de différentes manières. A titre d'exemple, un revêtement ou une lame en matériau diffusant 14.3 peut être formée sur une des deux faces principales et opposées d'une paroi transparente 14.4 de l'écran, au niveau de la première zone. Un tel revêtement ou une telle lame peut comprendre des microparticules réfléchissantes assurant des réflexions dans de nombreuses directions. La lame en matériau diffusant 14.3 peut notamment être surmoulée sur la paroi principale transparente 14.4. Encore à titre d'exemple, l'écran 14 peut comprendre sur au moins une de ses faces principales et opposées un relief formant un dioptre avec une surface complexe déviant la lumière par réfraction dans diverses directions.

L'activation des deux faisceaux lumineux 6 et 8 est assurée par le module lumineux 16, plus particulièrement par l'alimentation de la source lumineuse 16.1 et par la commande, avantageusement électrique, du dispositif optique imageur 16.2. Pour former le faisceau lumineux 6 uniquement, la source lumineuse 16.1 doit être activée et le dispositif optique imageur 16.2 doit être configuré pour n'éclairer que la première zone 14.1. Similairement, pour former le faisceau lumineux 8 uniquement, la source lumineuse 16.1 doit être activée et le dispositif optique imageur 16.2 doit être configuré pour n'éclairer que la deuxième zone 14.2. Pour former les faisceaux lumineux 6 et 8 en même temps, la source lumineuse 16.1 doit être activée et le dispositif optique imageur 16.2 doit être configuré pour éclairer simultanément les première et deuxième zones 14.1 et 14.2.

Le dispositif lumineux 16 présente une source lumineuse 16.2 ponctuelle de sorte à ce que le faisceau lumineux produit présente une profondeur de champ infinie. Cela permet alors à l'image projetée sur la surface de projection de rester nette.

Il est ailleurs à noter que la surface de projection peut être autre qu'une portion de la route au voisinage du dispositif lumineux. En effet, à titre d'exemple, une portion de carrosserie du véhicule peut servir de surface de projection, ou encore une surface de projection spécifique peut être prévue sur le véhicule.

La surface de projection peut afficher le pictogramme en réflexion, comme c'est le cas avec la portion de route au voisinage du dispositif lumineux, ou en transmission. Dans ce dernier cas, la surface de projection doit alors être transparente ou translucide.

Il est également à noter que l'écran du dispositif lumineux peut comprendre plus de deux zones, de manière à réaliser plus de deux faisceaux lumineux. Il est en effet envisageable de prévoir une troisième zone, le module lumineux étant alors configuré pour éclairer de manière sélective chacune des zones. Alternativement, un module lumineux additionnel peut être prévu.

## Revendications

1. Dispositif lumineux (4), notamment pour véhicule automobile (2), comprenant :
- un écran transparent ou translucide (14) ;
- un module lumineux (16) apte à projeter un faisceau lumineux sur l'écran (14) ;
**caractérisé en ce que**
l'écran (14) comprend une première zone diffusante (14.1) et une deuxième zone non diffusante (14.2), de sorte à ce qu'une première partie du faisceau lumineux, projetée sur la première zone (14.1), soit diffusée (6) par l'écran (14) et qu'une deuxième partie dudit faisceau soit transmise (8) par ledit écran (14) vers une surface de projection extérieure (10).

2. Dispositif lumineux (4) selon la revendication 1, **caractérisé en ce que** le module lumineux (16) comprend une source lumineuse (16.1) et un imageur à commande (16.2) apte à former différentes images en fonction d'un signal de commande.

3. Dispositif lumineux (4) selon la revendication 2, **caractérisé en ce que** l'imageur à commande (16.2) comprend un composant à cristaux liquides apte à transmettre de manière contrôlée la lumière émise par la source lumineuse (16.1).

4. Dispositif lumineux (4) selon l'une des revendications 1 et 2, **caractérisé en ce que** la source lumineuse (16.1) présente une surface éclairante inférieure ou égale à 10 mm².

5. Dispositif lumineux (4) selon l'une des revendications 1 à 4, **caractérisé en ce que** le module lumineux (16) est configuré pour former des images lumineuses distinctes et indépendantes sur les première et deuxième zones (14.1, 14.2) de l'écran (14).

6. Dispositif lumineux (4) selon la revendication 5, **caractérisé en ce que** le module lumineux (16) est configuré pour que la ou les images lumineuses transmises par la deuxième zone (14.2) de l'écran (14) comprennent des pictogrammes.

7. Dispositif lumineux (4) selon l'une des revendications 1 à 6, **caractérisé en ce que** les première et deuxième zones (14.1, 14.2) de l'écran (14) sont adjacentes.

8. Dispositif lumineux (4) selon l'une des revendications 1 à 7, **caractérisé en ce que** la première zone (14.1) de l'écran (14) comprend un film diffusant (14.3) et/ou une surface avec un relief régulier formant un dioptre diffusant.

9. Dispositif lumineux (4) selon l'une des revendications 1 à 8, **caractérisé en ce que** la deuxième zone (14.2) de l'écran est transparente et lisse.

10. Dispositif lumineux (4) selon l'une des revendications 1 à 9, **caractérisé en ce que** le dispositif (4) comprend un boîtier (12) avec une ouverture et logeant le module lumineux (16), l'écran formant une glace (14) recouvrant l'ouverture du boîtier (12).

11. Dispositif lumineux (4) selon l'une des revendications 1 à 10, **caractérisé en ce que** la deuxième zone (14.2) de l'écran (14) est située en dessous de la première zone (14.1) lorsque le dispositif (4) est en position de montage.

12. Dispositif lumineux (4) selon l'une des revendications 1 à 11, **caractérisé en ce que** le dispositif (4) est un feu arrière de véhicule automobile.

## Patentansprüche

1. Beleuchtungsvorrichtung (4), insbesondere für ein Kraftfahrzeug (2), bestehend aus
- einen durchsichtigen oder durchscheinenden Schirm (14);
- ein Beleuchtungsmodul (16), das in der Lage ist, einen Lichtstrahl auf den Schirm (14) zu projizieren;
**dadurch gekennzeichnet, dass**
der Schirm (14) einen ersten diffusiven Bereich (14.1) und einen zweiten nicht diffusiven Bereich (14.2) umfasst, so dass ein erster Teil des Lichtstrahls, der auf den ersten Bereich (14.1) projiziert wird, durch den Schirm (14) gestreut (6) wird und dass ein zweiter Teil des Strahls (8) durch den Schirm (14) zu einer externen Projektionsfläche (10) übertragen wird.

2. Beleuchtungsvorrichtung (4) nach Anspruch 1, **dadurch gekennzeichnet, dass** das Beleuchtungsmodul (16) eine Lichtquelle (16.1) und einen gesteuerten Bildgeber (16.2) umfasst, der in der Lage ist, ausgehend von einem Steuersignal verschiedene Bilder zu erzeugen.

3. Beleuchtungsvorrichtung (4) nach Anspruch 2, **dadurch gekennzeichnet, dass** der gesteuerte Bildgeber (16.2) eine Flüssigkristallkomponente umfasst, die in der Lage ist, das von der Lichtquelle (16.1) emittierte Licht kontrolliert zu übertragen.

4. Beleuchtungsvorrichtung (4) nach einem der Ansprüche 1 und 2, **dadurch gekennzeichnet, dass** die Lichtquelle (16.1) eine Beleuchtungsfläche von weniger als oder gleich 10 mm2 aufweist.

5. Beleuchtungsvorrichtung (4) nach einem der Ansprüche 1 bis 4, **dadurch gekennzeichnet, dass** das Beleuchtungsmodul (16) so konfiguriert ist, dass es getrennte und unabhängige Lichtbilder auf dem ersten und zweiten Bereich (14.1, 14.2) des Bildschirms (14) bildet.

6. Beleuchtungsvorrichtung (4) nach Anspruch 5, **dadurch gekennzeichnet, dass** das Beleuchtungsmodul (16) so konfiguriert ist, dass das (die) Lichtbild(er), das (die) durch den zweiten Bereich (14.2) des Schirms (14) übertragen wird (werden), Piktogramme umfasst (umfassen).

7. Beleuchtungsvorrichtung (4) nach einem der Ansprüche 1 bis 6, **dadurch gekennzeichnet, dass** der erste und der zweite Bereich (14.1, 14.2) des Schirms (14) benachbart sind.

8. Beleuchtungsvorrichtung (4) nach einem der Ansprüche 1 bis 7, **dadurch gekennzeichnet, dass** der erste Bereich (14.1) des Schirms (14) einen Diffusionsfilm (14.3) und/oder eine Oberfläche mit regelmäßigem Relief umfasst, die eine diffusive dioptrische Linse bildet.

9. Beleuchtungsvorrichtung (4) nach einem der Ansprüche 1 bis 8, **dadurch gekennzeichnet, dass** der zweite Bereich (14.2) des Schirms transparent und glatt ist.

10. Beleuchtungsvorrichtung (4) nach einem der Ansprüche 1 bis 9, **dadurch gekennzeichnet, dass** die Vorrichtung (4) ein Gehäuse (12) mit einer Öffnung umfasst, das das Beleuchtungsmodul (16) aufnimmt, wobei der Schirm eine äußere Linse (14) bildet, die die Öffnung des Gehäuses (12) abdeckt.

11. Beleuchtungsvorrichtung (4) nach einem der Ansprüche 1 bis 10, **dadurch gekennzeichnet, dass** der zweite Bereich (14.2) des Schirms (14) unterhalb des ersten Bereichs (14.1) angeordnet ist, wenn sich die Vorrichtung (4) in der Einbaulage befindet.

12. Beleuchtungsvorrichtung (4) nach einem der Ansprüche 1 bis 11, **dadurch gekennzeichnet, dass** die Vorrichtung (4) eine Kraftfahrzeug-Rückleuchte ist.

## Claims

1. Lighting device (4), in particular for a motor vehicle (2), comprising:
- a transparent or translucent screen (14);
- a lighting module (16) able to project a light beam onto the screen (14);
**characterized in that**
the screen (14) comprises a first diffusive area (14.1) and a second non-diffusive area (14.2), such that a first part of the light beam, projected onto the first area (14.1), is diffused (6) by the screen (14) and that a second part of said beam (8) is transmitted by said screen (14) to an external projection surface (10).

2. Lighting device (4) according to Claim 1, **characterized in that** the lighting module (16) comprises a light source (16.1) and a controlled imager (16.2) able to form various images on the basis of a control signal.

3. Lighting device (4) according to Claim 2, **characterized in that** the controlled imager (16.2) comprises a liquid crystal component able to transmit in a controlled manner the light emitted by the light source (16.1).

4. Lighting device (4) according to either of Claims 1 and 2, **characterized in that** the light source (16.1) has a lighting surface of less than or equal to 10 mm².

5. Lighting device (4) according to any of Claims 1 to 4, **characterized in that** the lighting module (16) is configured to form separate and independent light images on the first and second areas (14.1, 14.2) of the screen (14).

6. Lighting device (4) according to Claim 5, **characterized in that** the lighting module (16) is configured so that the light image(s) transmitted by the second area (14.2) of the screen (14) comprise pictograms.

7. Lighting device (4) according to any of Claims 1 to 6, **characterized in that** the first and second areas (14.1, 14.2) of the screen (14) are adjacent.

8. Lighting device (4) according to any of Claims 1 to 7, **characterized in that** the first area (14.1) of the screen (14) comprises a diffusive film (14.3) and/or a surface with a regular relief forming a diffusive dioptric lens.

9. Lighting device (4) according to any of Claims 1 to 8, **characterized in that** the second area (14.2) of the screen is transparent and smooth.

10. Lighting device (4) according to any of Claims 1 to 9, **characterized in that** the device (4) comprises a housing (12) with an aperture, which housing houses the lighting module (16), the screen forming an outer lens (14) covering the aperture of the housing (12).

11. Lighting device (4) according to any of Claims 1 to 10, **characterized in that** the second area (14.2) of the screen (14) is situated below the first area (14.1) when the device (4) is in the installed position.

12. Lighting device (4) according to any of Claims 1 to 11, **characterized in that** the device (4) is a motor vehicle rear light.
